# EUROPÄISCHE PATENTSCHRIFT

(11) **EP 1 617 124 B1**
(45) Veröffentlichungstag und Bekanntmachung des Hinweises auf die Patenterteilung: **10.06.2009**
(21) Anmeldenummer: 04016748.8
(22) Anmeldetag: 15.07.2004
(51) Int. Cl.: F16L 47/02, F16L 51/02, F16L 25/12, E03F 11/00

(54) **Rohrstück, Abwasser- oder Schachtbauteil und Verfahren zu deren Herstellung**
Pipe, draining or manhole segment and method for production thereof
Tuyau, élément d'égout ou regard et procédé de fabrication relatif

(43) Veröffentlichungstag der Anmeldung: 18.01.2006
(73) Patentinhaber: Kessel GmbH, 85101 Lenting (DE)
(72) Erfinder: Kessel, Bernhard, 85101 Lenting (DE)
(74) Vertreter: Grünecker, Kinkeldey, Stockmair & Schwanhäusser Anwaltssozietät

(56) Entgegenhaltungen:
- EP-A- 1 231 424
- WO-A-03/018296
- DE-A- 3 151 845
- DE-A- 19 600 010
- FR-A- 2 800 106
- US-A- 5 778 935

## Beschreibung

Die Erfindung betrifft einen Abwasser- oder Schachtbauteil gemäß Oberbegriff des Patentanspruchs 1, und ein Verfahren gemäß Oberbegriff des Anspruchs 9. Ein solcher Abwasser- oder Schachtbauteil aus Kunststoff ist aus FR-A-2800106 bekannt.

Beispielsweise wird zwischen einem Schwerkraft-Fettabscheider-Rohrstück (Zulauf und Ablauf) am Behälter und einem installationsbedingt schrägen Zulauf- oder Ablauf-Rohrstrang (Knickwinkel kleiner 15°) ein Rohrzwischenstück aus flexiblem Material über die Rohr-Enden gesteckt und mit Rohrschellen dicht festgelegt. Ähnlich kann an der Saug- oder Druckseite einer Pumpe das im Pumpengehäuse angeformte Rohrstück über ein flexibles Rohrzwischenstück mit einem geringfügig schräg verlaufenden (Knickwinkel kleiner etwa 15°) Rohrstück mittels Rohrschellen dicht verbunden werden. Die Ausbildung solcher geringfügig knickenden Rohrstränge ist arbeitsintensiv. Außerdem stellen die Dichtbereiche akute Fehlerquellen dar, da die Dichtigkeit und der Halt unter betriebsbedingten Vibrationen, thermischen Einflüssen und bei Druckschwankungen versagen können. Aus Sicherheitsgründen werden lange Überlappungsbereiche und oftmals mehr als zwei Rohrschelle pro Dichtbereich vorgesehen, was teuer ist, zu hohem Gewicht führt und die Montage erschwert. Mit einem solchen flexiblen, separaten Rohrzwischenstück lassen sich kleine Knickwinkel leicht formen, für die es in der Regel keine maßgeformten Rohrkrümmer gibt, und wird die Körperschall- und Vibrationsübertragungsstrecke unterbrochen, was in wasser- oder abwassertechnischen Anwendungsfällen wichtige Gesichtspunkte sein können. Im Grunde genommen ist jedoch ein solches, mit mechanischen Befestigungsmitteln abgedichtetes Rohrzwischenstück eine aufwendige Improvisation zum Ausgleich kleinerer Knickwinkel und/oder zur Körperschalldämpfung.

Ferner ist es bei Ablaufbehältern in der Abwassertechnik oftmals erforderlich, im Leitungsverlauf zwischen dem Zulauf oder dem Ablauf des Behälters und dem weiterführenden Leitungssystem ohne Rohrkrümmer Knickwinkel bis zu 15° zu bilden. Bisher werden hierfür in der Praxis separate flexible Zwischenrohrstücke und Rohrschellen benutzt.

Aus EP 1 231 424 A ist ein Rohrstück aus zwei starren Kunststoffrohrabschnitten und einer dazwischen integrierten, flexiblen Faltenbalghülse bekannt. Die Faltenbalghülse enthält aneinander anschließende, längsverlaufende Versteifungsrippen zwischen den Falten. Die Faltenbalghülse ist aus demselben harten Kunststoff, beispielsweise durch Blasverformen, einstückig mit den Rohrabschnitten geformt, wie die Rohrabschnitte selbst, und erbringt durch die Falten eine Biegeelastizität.

Aus WO03/018296 ist ein Kunststoff-Rohrstück mit starren Endfittings und einem Kunststoff-Rohrzwischenstück bekannt, die getrennt vorgefertigt und durch Reibschweißen miteinander verbunden sind. Das Rohrzwischenstück kann ein Spiralrohr aus relativ flexiblem Kunststoff mit einer eingebetteten Stützspirale aus relativ starrem Kunststoff sein. Andernfalls ist das Rohrzwischenstück ein Kunststoffrohrabschnitt aus starrem Kunststoff.

Aus DE-A-196 00 010 ist ein starres Metallrohr mit integriertem flexiblem Anschlussbereich bekannt. An das Metallrohr mit einer Kunststoffbeschichtung ist der flexible Anschlussbereich aus Kunststoff in Zweikomponententechnik angespritzt.

Aus US-A-5 778 935 ist es bekannt, beabstandete Enden von Abwasser-Rohrsträngen durch ein flexibles Kunststoff-Rohrzwischenstück zu verbinden, auf dessen Enden Anschlusskupplungen aufgeklebt sind, die auch mit den Strangenden verklebt werden.

Der Erfindung liegt die Aufgabe zugrunde, einen Abwasser- oder Schachtbauteil und ein Verfahren zu dessen Herstellung anzugeben, mit denen in der Abwasser- und Schachttechnik technisch einwandfrei Rohrstränge mit wahlweise geradem oder geringfügig abknickendem Verlauf und mit einer Körperschall-Übertragungsunterbrechung installierbar sind.

Die gestellte Aufgabe wird mit den Merkmalen des Anspruchs 1 bzw. des Anspruchs 9 gelöst.

Der Abwasser- oder Schachtbauteil mit dem schon in die Behälterwand integrierten Rohrstück mit einstückig eingeformtem Rohrzwischenstück aus elastischem Material ermöglicht wahlweise Anschluss-Installationen, die gerade sind oder relativ schwach abknicken, denn das elastische Rohrzwischenstück erlaubt die Bildung von Knickwinkeln bis beispielsweise etwa 15°. Günstig ist ferner die durch das Rohrzwischenstück gebildete Körperschall-Übertragungsunterbrechung. Das mit dem Abwasser- oder Schachtbauteil einstückige Rohrstück sichert über lange Gebrauchsdauer die erforderliche Dichtigkeit und den notwendigen Halt zwischen den Rohrabschnitten und vereinfacht die Installation. Ein guter Kompromiss hinsichtlich der Verformbarkeit ohne lokale Einbeulungstendenz, der Druckfestigkeit, der Gestaltfestigkeit und der einfachen Handhabung bei der Installation wird mit Shore-Härten zwischen 30 bis 70 für das Rohrzwischenstück erzielt. Um eine kontrollierte Knickung zwischen den Rohrabschnitten sicherzustellen, das Aus-oder Einbeulen des mit Shore-Härten zwischen 30 und 70 relativ weichen Rohrzwischenstücks beim Knicken zu vermeiden, und das Rohrzwischenstück bei signifikanten Druckunterschieden abzustützen, ohne die Knickbeweglichkeit zu beeinträchtigen, ist entweder eine offene Stützstruktur mit annähernd ringförmiger Gestalt vorgesehen, die mit wenigstens einem Rohrabschnitt stoffschlüssig verbunden und aus dessen Kunststoff geformt ist und/oder wird das Rohrzwischenstück mit einer geformten Stützstruktur aus dem thermoplastischen Material selbst gegen lokales Einbeulen abgestützt. Diese Stützstruktur erhöht die radiale Druckfestigkeit und bewirkt außerdem, dass beim Abknicken der beiden Rohrabschnitte kein nennenswertes lokales Einbeulen im Rohrzwischenstück auftritt, so dass der Innenquerschnitt nicht unzulässig verengt und kein Strömungshindemis geschaffen wird. Die Stützstruktur besteht aus Umfangsrippen und dazwischenliegenden Umfangsnuten, vorzugsweise mit Trapezquerschnitten oder gerundeten Querschnitten. Es kann auch eine Gewindestruktur außen vorgesehen sein. Der mit wenigstens einem Verbund-Rohrstück ausgestattete Abwasser- oder Schachtbauteil ist zweckmäßig ein Abwasser-Ablaufbehälter, an dem das Verbund-Rohrstück z. B. den Zulauf und/oder den Ablauf bildet, oder alternativ ein Schacht- oder Schachtwandelement, an dem das Verbund-Rohrstück eine Zuführung oder eine Abführung bildet, und zwar dann entweder für ein Fluid oder für Rohre, Kabel oder ähnliche feste Objekte.

Das Verfahren ist zweckmäßig, weil nach der Zweikomponententechnik in derselben Spritzgussform das Rohrzwischenstück innerhalb des Abstandes zwischen den Rohrabschnitten geformt und wegen der noch heißen Rohrabschnitte gleich dicht und dauerhaft haltbar mit den Enden der Rohrabschnitte verbunden wird. Dies ermöglicht eine kostengünstige Herstellung des Abwasser- oder Schachtbauteils mit hoher Qualität, insbesondere in einer Großserienfertigung.

Zweckmäßig ist die offene Stützstruktur mit der Oberfläche des Rohrzwischenstücks stoffschlüssig verbunden.

Zwei auf einer annähernden Ringform aufbauende Ausbildungen der Stützstruktur sind zweckmäßig. Entweder ist die Stützstruktur eine im Wesentlichen zur Rohrstückachse koaxiale, gewindegangartige Spirale mit Zwischenabständen zwischen den Spiralwindungen, oder aus mehreren, einzelnen, im Wesentlichen zur Rohrstückachse koaxialen und voneinander beabstandeten, zweckmäßigerweise zueinander parallelen Ringen ausgebildet. Die Zwischenabstände zwischen den Spiralwindungen bzw. den Ringen werden so gewählt, dass der gewünschte Knickbereich erzielt werden kann.

Aus formentechnischen Gründen, und auch um die offene Stützstruktur in sich stabil zu gestalten, ist es zweckmäßig, benachbarte Spiralwindungen bzw. Ringe über wenigstens annähernd zur Rohrstückachse parallele Zwischenstege zu verbinden, wobei, zweckmäßig, der erste und der letzte Zwischensteg oder der Steg grundsätzlich auch integral mit dem angrenzenden Rohrabschnitt verbunden wird.

Das Verbundrohrstück des Abwasser- oder Schachtbauteils kann zumindest in einem Umfangsbereich einen durchgehenden Steg zwischen den Rohrabschnitten haben, der eine Biegesperre für eine bestimmte Knickrichtung bildet. Der Steg ist entweder außerhalb der Stützstruktur und von dieser getrennt zwischen den Rohrabschnitten geformt, oder als Ringe oder Spiralwindungen verbindender durchgehender Steg oder durch einzelne Zwischenstege, die miteinander fluchten oder in Umfangsrichtung geringfügig zueinander versetzt sind, so dass sich dann ein mäanderartiger Stegverlauf ergibt.

Um die Knickbeweglichkeit so wenig wie möglich zu behindern und dennoch eine sichere, radial wirkende Stützfunktion zu erzielen, kann der Querschnitt der Spiralwindungen bzw. der Ringe und auch des Stegs bzw. der Zwischenstege dreieckig oder als Hochkant-Rechteck ausgebildet sein.

Zweckmäßig sind die Rohrabschnitte Spritzgussteile aus ABS oder PP. Das Rohrzwischenstück sollte ein Spritzgussteil aus thermoplastischem Elastomer sein, der mit dem Kunststoff der Rohrabschnitte haltbar verbindbar ist. Die offene Stützstruktur wird mit den Rohrabschnitten einstückig gespritzt, obwohl es denkbar ist, diese Stützstruktur separat zu spritzen und nachträglich anzubringen.

Ein weiteres, wichtiges Merkmal des Abwasser- oder Schachtbauteils ist wenigstens eine lokale Biegesperre in zumindest einem Umfangsbereich des Rohrstücks. Die Biegesperre kann entweder eine zu starke Knickung verhindern, oder verhindern, dass das Rohrstück beim Installieren in eine unzulässige Richtung geknickt wird und dann ein Strömungshindernis bildet. Beispielsweise verhindert die Biegesperre ein Hochbiegen des einen Rohrabschnittes in einem Ablaufstrang aus dem Abwasser-oder Schachtbauteil mit einem bestimmten Mindestgefälle. Das Rohrstück bleibt in den nicht durch die Biegesperre kontrollierten Richtungen knickbar. In Einbaulage des Abwasser- oder Schachtbauteils sichert die Biegesperre, dass der freie Rohrabschnitt nicht aus Versehen in eine unzulässige schräge Richtung relativ zum anderen Rohrabschnitt weisen kann. Die Biegesperre ist, z.B., abhängig davon oben oder unten positioniert, ob das Verbund-Rohrstück als Ablauf oder als Zulauf dienen soll.

Die Biegesperre (oder Biegebegrenzungsvorrichtung) besteht bei einer zweckmäßigen Ausführungsform aus an den Rohrabschnitten angeordneten, aufeinander ausgerichteten Sperrnasen, die den Bereich des Rohrzwischenstücks zur Gänze oder zumindest weitgehend überbrücken. Gegebenenfalls reicht nur eine Sperrnase an einem Rohrabschnitt aus. Diese Sperrnase wirkt dann mit einem Anschlag am anderen Rohrabschnitt zusammen, oder mit einem Anschlag, der im Installationsbereich außen vorgesehen wird. Jede Sperrnase ist zweckmäßigerweise außenseitig am Rohrabschnitt angebracht und kann direkt an dem Rohrabschnitt angeformt sein. Die Sperrnasen werden in der gewünschten Position relativ zum Behälterkörper des Abwasser-oder Schachtbauteils angeordnet und wirken erst dann, wenn beim Installieren unbeabsichtigt oder aus Nachlässigkeit versucht wird, eine unzulässige Knickung einzustellen.

Die Länge des Rohrzwischenstücks kann in etwa der ganzen bis der halben Nennweite entsprechen. Die Rohrabschnitte sind z.B. in ungebogenem Zustand des Rohrstücks koaxial. Das Rohrstück kann kreisrunden Querschnitt haben oder einen anderen, unrunden Hohlquerschnitt. Im Rohrstück können die Rohrabschnitte gleiche oder unterschiedliche Nennweiten aufweisen. Das Rohrzwischenstück fungiert dann wie ein Übergangselement zwischen den unterschiedlichen Nennweiten. Ferner kann die Querschnittsform des einen Rohrabschnittes verschieden sein von der Querschnittsform des anderen Rohrabschnittes, wobei das Rohrzwischenstück einen harmonischen Übergang herstellt.

Unter der Voraussetzung, dass die offene Stützstruktur Ringe und Spiralwindungen umfasst, die durch Stege oder Zwischenstege miteinander und mit den Rohrabschnitten verbunden sind, werden zweckmäßig die Rohrabschnitte und die Stützstruktur aus einer einzigen gemeinsamen Angussstelle gespritzt, so dass das Spritzgut beispielsweise von dem einen Rohrabschnitt unter Formen der Stützstruktur in den Hohlraum des anderen Rohrabschnitts eindringt und dort den anderen Rohrabschnitt formt.

Anhand der Zeichnungen werden Ausführungsformen des Erfindungsgegenstandes erläutert. Es zeigen:
- Fig. 1: einen Achsschnitt eines Verbund-Rohrstücks für einen Abwasser- oder Schachtbauteil,
- Fig. 2: eine Perspektivansicht einer weiteren Ausführungsform des Verbund-Rohrstücks,
- Fig. 3: einen Abwasser-Bauteil mit zwei Verbund-Rohrstücken in einem Achsschnitt,
- Fig. 4: den Abwasser-Bauteil in einer perspektivischen Druntersicht,
- Fig. 5: eine Perspektivansicht eines Verbund-Rohrstücks mit integrierter, offener Stützstruktur,
- Fig. 6: eine Seitenansicht einer weiteren Ausführungsform eines Verbund-Rohrstücks mit offener Stützstruktur und einer Biegesperre,
- Fig. 7: eine Perspektivansicht einer weiteren Ausführungsform eines Verbund-Rohrstücks mit offener Stützstruktur und integrierter Biegesperre, und
- Fig. 8: eine perspektivische Druntersicht eines Abwasser- oder Schachtbauteils, insbesondere eines Abwasser-Ablaufbehälters mit einem integrierten Verbund-Rohrstück.

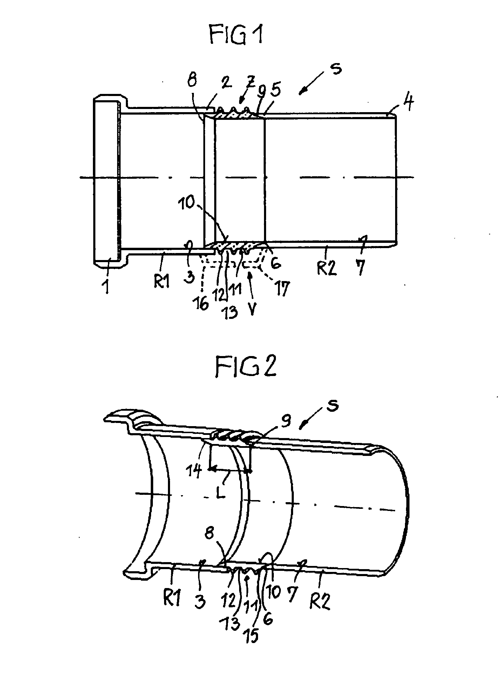

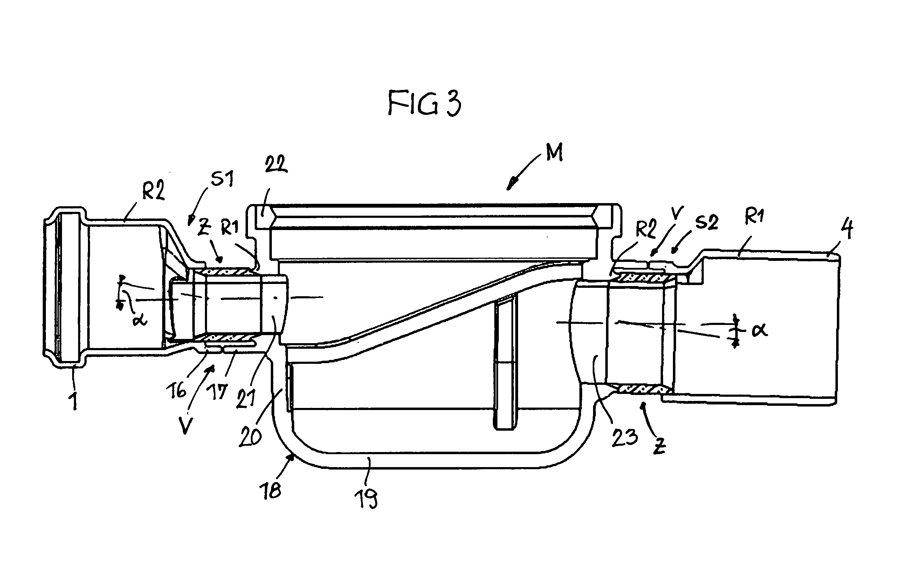

Ein Verbund-Rohrstück S in den Fig. 1 und 2 besteht aus zwei axial beabstandeten relativ starren Rohrabschnitten R1, die über ein innerhalb des Abstandes stoffschlüssig d.h. durch Haftung, eingefügtes Rohrzwischenstück Z aus flexiblem Material miteinander verbunden sind. Das Verbund-Rohstück S ist ein einstückiger Bauteil speziell für Abwasser- und Schachtbauteile der Fig. 3, 4 und 8 in der Wasser- und Abwasser- und Schachtbautechnik. Die Rohrabschnitte R1, R2 bestehen beispielsweise aus ABS oder PP. Das Rohrzwischenstück Z besteht aus einem thermoplastischen Elastomer, der zu dem Kunststoff der Rohrabschnitte R1, R2 passt, d.h. sich mit ihm dicht und haltbar verbinden lässt.

Vorzugsweise ist das Verbund-Rohrstück S nach der Zweikomponententechnik durch Spritzgießen in zwei Schritten in einer Spritzgussform hergestellt.

Das Verbund-Rohrstück S wird beispielsweise so hergestellt, dass die Achsen der Rohrabschnitte R1, R2 miteinander fluchten. Alternativ könnte das Verbund-Rohrstück S so gefertigt werden, dass es eine vorgegebene Knickung zwischen den Rohrabschnittsachsen aufweist.

Die Rohrabschnitte R1, R2 und das Rohrzwischenstück Z können runden Querschnitt haben, oder oval, oder beliebig profiliert sein. Die Nennweite des Rohrabschnittes R1 ist bei der gezeigten Ausführungsform in den Fig. 1 und 2 größer als die Nennweite des Rohrabschnittes R2. Die Nennweite des Rohrzwischenstücks Z ist bei der gezeigten Ausführungsform gleich der Nennweite des Rohrabschnitts R2. Andere Nennweitenabstufungen sind ebenfalls möglich.

Der Rohrabschnitt R1 lässt sich dank des flexiblen Rohrzwischenstücks Z relativ zum Rohrabschnitt R2 nach allen Seiten knicken, beispielsweise bis zu einem Knickwinkel von etwa 15°. Auch geringfügige Achsquerversetzungen sind zwischen den Rohrabschnitten R1, R2 dank des Rohrzwischenstücks Z möglich.

Der Rohrabschnitt R1 hat in Fig. 1 ein Muffenende 1, eine glatte Innenwand 3 und ein gerundetes Ende 2. Der Rohrabschnitt R2 hat ein Spitzenende 4, eine glatte Innenwand 7 und ein freies Ende 5, in welchem eine von innen schräg nach außen ansteigende Konusfläche 6 geformt ist. Andere Rohrabschnittsformen sind ebenfalls möglich.

Das Rohrzwischenstück Z hat im Grundzug einen parallelogrammartigen Querschnitt und ist mit einer annähernd zylindrischen Anfangsfläche 8 an die Innenwand 3 des Rohrabschnittes R1 angehaftet. Am anderen Ende besitzt das Rohrzwischenstück Z eine schräge Endfläche 9, die flächig an der Konusfläche 6 angehaftet ist. Das Rohrzwischenstück Z hat bei der gezeigten Ausführungsform eine ebene Innenwand 10 und außenseitig eine Stützstruktur 11 gegen lokales Einbeulen beim Knicken. Die Stützstruktur 11 besteht aus Umfangsrippen 12 aus dem Thermoplasten mit dazwischen liegenden Umfangsnuten 13, beispielsweise jeweils mit gerundeten oder trapezförmigen Querschnitten. Die Rippen 12 könnten auch gewindeartig verlaufen. Ferner könnte, falls erforderlich, auch oder nur die Innenwand 10 eine ähnliche Stützstruktur aufweisen.

Das Verbund-Rohrstück S kann mit wenigstens einer Biegesperre V (Biegebegrenzungsvorrichtung) in wenigstens einem Umfangsbereich ausgestattet sein (gestrichelt in Fig. 1 angedeutet). Die Biegesperre V besteht beispielsweise aus an den Außenseiten der Rohrabschnitte R1, R2 angeformten und auseinander ausgerichteten Sperrnasen 16, 17, die in radialem Abstand zum Rohrzwischenstück Z verlaufen und in der in Fig. 1 gezeigten koaxialen Ausrichtung der Rohrabschnitte R1, R2 entweder aneinander anliegen oder (wie gezeigt) einen kleinen Abstand einhalten.

Wird beispielsweise in Fig. 1 versucht, den Rohrabschnitt R2 in der Zeichnungsebene nach unten gegenüber dem Rohrabschnitt R1 zu knicken, dann kommen die Spermasen 16, 17 zur gegenseitigen Abstützung, so dass sie den Knickwinkel begrenzen oder, falls sie bereits von Beginn aneinander anliegen, überhaupt keine Knickung in dieser Richtung zulassen. In allen anderen, durch die Biegesperre V nicht gesperrten Knickrichtungen kann eine Knickung eingestellt werden.

In der Ausführungsform in Fig. 2 ist die Stützstruktur 11 an der Außenseite des Rohrzwischenstücks Z mit markanteren Umfangsrippen 12 und dazwischen liegenden Umfangsnuten 13, jeweils in Trapezform, ausgebildet, wobei die Umfangsnuten 13 etwas weiter sind als die Umfangsrippen 12. Darüber hinaus stimmt die Ausbildung des Verbund-Rohrstücks S in Fig. 2 mit der zu Fig. 1 erläuterten überein.

Das Rohrzwischenstück Z endet im Rohrabschnitt R1 mit einer konischen oder aufgeweiteten Endfläche 14, während im Anschluss an die konische Endfläche 9 eine kleine Schulter 15 angeformt ist, mit der sich das Rohrzwischenstück Z am Ende des Rohrabschnitts R2 nach außen abstützt bzw. mit diesem verbunden ist.

Beim in Fig. 2 gezeigten Verbund-Rohrstück S ist keine Biegsperr- und/oder Biegebegrenzungsvorrichtung V vorgesehen, oder es befindet sich eine solche an wenigstens einer Umfangsstelle, die in der Schnittdarstellung weggeschnitten ist. Die Länge L des Rohrzwischenstücks Z beträgt in den Fig. 1 und 2 annähernd die Hälfte der Nennweite des Rohrzwischenstücks Z. Die Länge L kann durchaus auch der Nennweite entsprechen oder sogar größer sein.

Das Verbund-Rohrstück S ist besonders zweckmäßig für die Wasser-, Abwasser- und Schachtbautechnik, weil es sowohl gerade installiert werden kann, als auch mit einem Knick bis beispielsweise 15°, und weil in jedem Installationssystem das Rohrzwischenstück Z aus dem flexiblen Material eine Körperschall-Übertragungsunterbrechung im Rohrstück S bildet, und/oder auch die Übertragung von Vibrationen weitgehend abdämpft. Das Verbund-Rohrstück S in den Fig. 1 und 2 ist zweckmäßig für Installationssituationen, bei denen fallweise ein Knickwinkel bis zu annähernd 15° zu beherrschen ist. Größere Knickwinkel werden mit üblichen maßgeformten Rohrkrümmern gebildet.

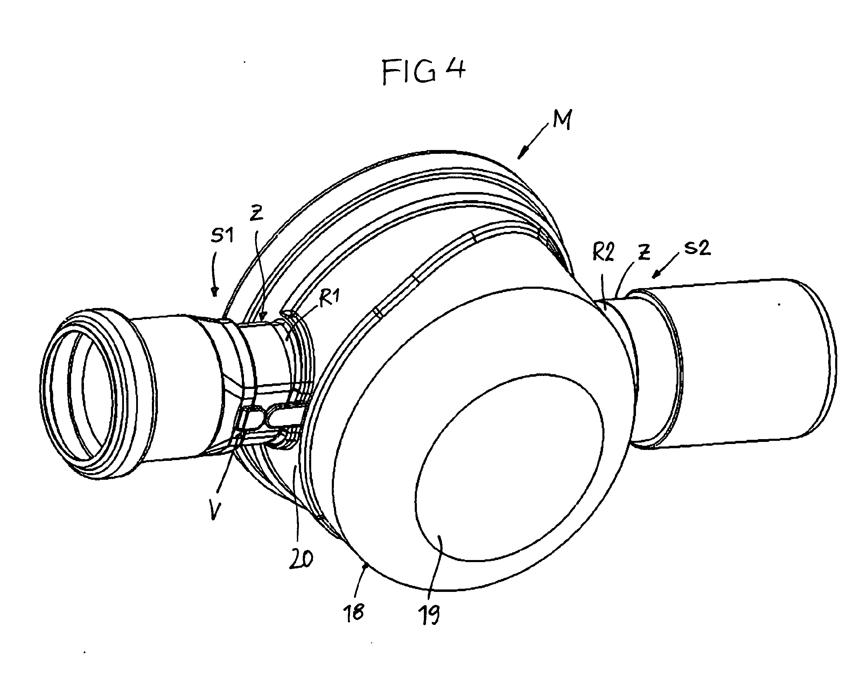

Die Fig. 3 und 4 illustrieren ein Beispiel eines Abwasserbauteils, z.B. einen Abwasserablauf, der einen gegebenenfalls in der Einbaulage oben offenen Behälter 18 mit einem Behälterboden 19 und einer Behälterseitenwand 20 sowie einen Zulauf S1 und einen Ablauf S2, jeweils als Verbund-Rohrstück, aufweist. Es könnte auch nur ein Rohrstück in der Behälterwandung 20 oder an anderer Stelle vorgesehen sein, oder es können mehr als zwei Rohrstücke vorgesehen sein. Auch im Behälterboden 19 könnte wenigstens ein Rohrstück vorgesehen sein, und/oder auch an der Oberseite des Behälters 18, falls dieser zumindest teilweise dort verschlossen sein sollte. Das jeweils vorgesehene Verbund-Rohrstück S kann einstückig angeformt oder separat geformt und nachträglich eingesetzt sein.

Der Abwasserbauteil M in den Fig. 3 und 4 kann für unterschiedliche Einsatzbedingungen konzipiert sein. Als nicht beschränkende Beispiele seien hier genannt: Reinigungs- oder Inspektionsschacht, Ablaufbehälter mit einem Einsatz wie einem Geruchverschluss oder einem Fangeimer oder einer Rückstauvorrichtung, Sammelbehälter einer Hebeanlage, und dgl. mehr. Das Verbund-Rohrstück S kann auch bei Fettabscheidem oder Abwasser- oder Kabelzugschächten analog verwendet werden.

Das Verbund-Rohrstück S ist beispielsweise der Zulauf S1 zum Behälter 18. Der Rohrabschnitt R1 ist als Rohransatz um einen Durchgang 21 in der Behälterwand 20 geformt. Der Rohrabschnitt R2 hat am kleindurchmessrigen Ende einen etwas größeren Durchmesser als der Rohrabschnitt R1 und erweitert sich zum Muffenende 1. Der Querschnitt der Rohrabschnitte R1, R2 muss (s. Fig. 4) nicht notwendigerweise kreisrund sein. Das Rohrzwischenstück Z aus einem thermoplastischen Elastomer kann in Zweikomponententechnik beim Spritzgießen des Behälters 18 mit dem Zulauf S1 zwischen die Rohrabschnitte R1, R2 integriert worden sein.

Da der Zulauf S1 ein Gefälle zum Behälter 18 haben sollte, bzw. zumindest horizontal verlaufen muss, ist die Biegesperre V in der gezeigten Einbaulage des Abwasserbauteils M unten am Verbund-Rohrstück positioniert. Die Sperrnasen 16, 17 stehen aneinander oder mit einem geringen Zwischenabstand gegenüber, so dass der Rohrabschnitt R2 in der Zeichnungsebene von Fig. 3 nicht nach unten zu knicken ist. Zur Seite oder nach oben lässt sich der Rohrabschnitt R2 hingegen knicken, beispielsweise bis zu einem Knickwinkel α von etwa 15°, falls dies die weitergehende Leitung erfordern sollte.

Der Ablauf S2 ist ggfs. ebenfalls ein Verbund-Rohrstück S aus den Rohrabschnitten R1, R2 (der Rohrabschnitt R2 ist ein Rohransatz in der Behälterwand 20 um eine Durchgangsöffnung 23) und dem Rohrzwischenstück Z.

Da der Ablauf S2 allenfalls horizontal oder mit einem Gefälle nach unten aus dem Behälter 18 führen sollte, ist die Biegesperre V in Einbaulage des Abwasserbauteils M oben positioniert. Der Rohrabschnitt R1 hat ein Spitzende 4 zum Einstecken in ein Muffenende der weiterführenden Leitung. Es könnten pro Verbund-Rohrstück auch mehrere Biegesperren V vorgesehen sein.

Beim Spritzgießen des Verbund-Rohrstücks S der Fig. 1 und 2 mit dem Behälter 18 in Fig. 3, 4 in einer Spritzgussform werden die Rohrabschnitte R1, R2 zunächst aus einem Kunststoff wie beispielsweise ABS oder PP in Formhohlräumen mit dem axialen Zwischenabstand geformt. Dabei kann zumindest im Rohrabschnitt R1 ein beweglicher Kernteil vorgesehen sein, der die Innenwand 3 formt und sich bis zur Konusfläche 6 des anderen Rohrabschnitts R2 erstreckt. In noch heißem Zustand der gespritzten Rohrabschnitte R1, R2 wird der Kernteil zurückgezogen, bis seine konische Endfläche an der Position der konischen Endfläche 14 des Rohrzwischenstücks Z steht. In den dadurch frei gemachten Hohlraum wird thermoplastischer Elastomer eingespritzt, nach der sogenannten Zweikomponententechnik, derart, dass das Rohrzwischenstück Z entsteht und sich mit den noch heißen und bindungsfähigen Rohrabschnitten R1, R2 stoffschlüssig verbindet. Falls vorhanden, werden die Sperrnasen der Biegesperre V mit den Rohrabschnitten R1, R2 gespritzt.

Bei einer alternativen, nicht im Rahmen der Erfindung liegenden Verfahrensvariante könnten die beiden Rohrabschnitte R1, R2 zunächst spritzgeformt und dann in eine weitere Form eingelegt werden, die auch den Formhohlraum für das Rohrzwischenstück enthält, ehe der thermoplastische Kunststoff eingespritzt wird.

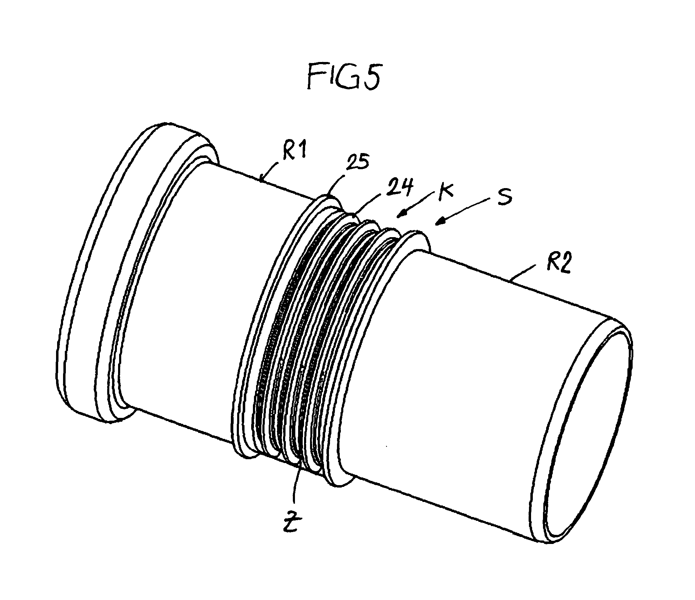

In Fig. 5 ist eine offene Stützstruktur K in Form einer Spirale vorgesehen, deren Spiralwindungen 24 sich zwischen beispielsweise an den Rohrabschnitten R1, R2 angeformten Ringen 25 mit Zwischenabständen erstrecken. Die Spiralwindungen 24 können dreieckigen oder Hochkant-Rechteck-Querschnitt aufweisen und bestehen zweckmäßig aus dem Material, aus dem auch die Rohrabschnitte R1, R2 geformt sind. Es bietet sich an, die offene Stützstruktur K einstückig mit den Rohrabschnitten R1, R2 auszubilden. Die Spiralwindungen 24 verlaufen entlang der äußeren Oberfläche des Rohrzwischenstücks Z und sind, zweckmäßig, mit dieser Oberfläche stoffschlüssig verbunden. Die Rohrabschnitte R1, R2 können demzufolge relativ zueinander nach allen Richtungen abgeknickt werden, und zwar innerhalb eines Biegebereiches, der bis zu etwa 15° reicht, ehe die Spiralwindungen 24 dann gegebenenfalls auf Block kommen.

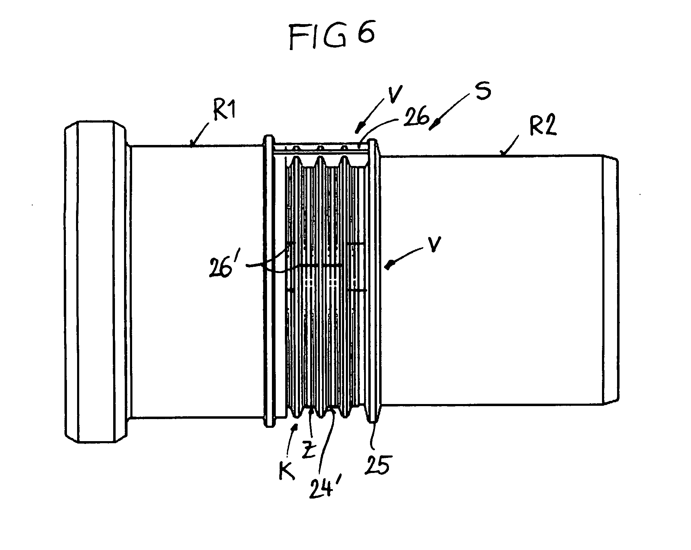

In Fig. 6 ist die offene Stützstruktur K des Verbund-Rohrstücks S aus einzelnen, voneinander beabstandeten, im Wesentlichen zueinander parallelen Ringen 24' gebildet, die auf der außenliegenden Oberfläche des Zwischenrohrstücks Z angehaftet sein können, und aus starrem Kunststoffmaterial bestehen können, gegebenenfalls aus demselben Kunststoffmaterial wie die Rohrabschnitte R1, R2.

Zusätzlich ist in wenigstens einem Umfangsbereich des Verbund-Rohrstücks S eine Biegesperre V vorgesehen. In Fig. 6 besteht diese Biegesperre V aus einem durchgehenden Längssteg, der die Ringkörper 25 der Rohrabschnitte R1, R2 miteinander verbindet und biegbar ist, ohne in seiner Längsrichtung (annähernd parallel zur Rohrstückachse) dehnbar oder stauchbar zu sein. Der Steg 26 erstreckt sich oberhalb der Ringe 24' der offene Stützstruktur K.

Alternativ ist in Fig. 6 angedeutet, dass die einzelnen Ringe 24' mit den Rohrabschnitten R1, R2 über wenigstens einen oder mehrere Zwischenstege 26' verbunden sind, und solche Zwischenstege 26' auch zwischen jeweils zwei benachbarten Ringen 24' verlaufen. Zweckmäßig werden diese Zwischenstege 26' in einem Umfangsbereich des Verbund-Rohrstücks konzentriert, so dass sie ebenfalls eine Biegesperre V bilden. Obwohl im Regelfall eine einzige Biegesperre V ausreicht, ist es durchaus denkbar, beispielsweise an diametral gegenüberliegenden Positionen jeweils eine Biegesperre V vorzusehen. In allen anderen Richtungen sind hingegen Knickeinstellungen möglich. Speziell die Zwischenstege 26' sind auch zweckmäßig, um den Materialfluss beim Spritzgießen zwischen den Ringen 24' besser zuzulassen.

Eine Biegesperre, wie in Fig. 6 gezeigt, könnte auch bei dem Verbundrohrstück S in Fig. 5 vorgesehen sein.

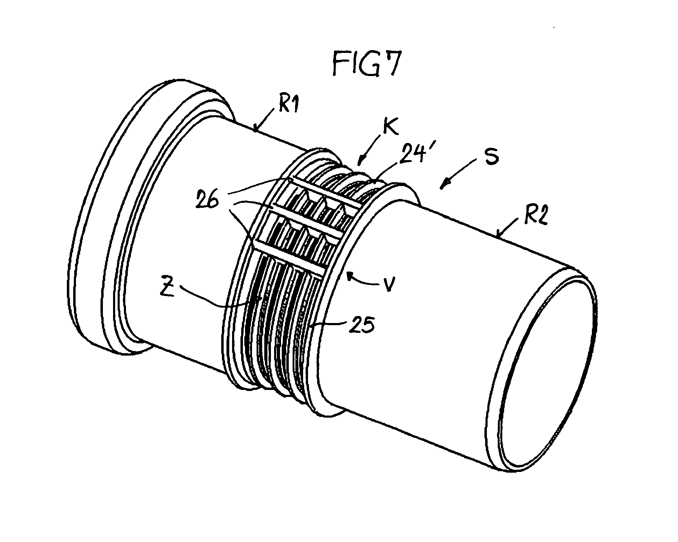

In Fig. 7 ist, ähnlich wie in Fig. 6, die offenen Stützstruktur K aus den einzelnen, beabstandeten und zueinander parallelen Ringen 24' vorgesehen. Als Biegesperre V sind mehrere in Umfangsrichtung beabstandete Längsstege 26 vorgesehen, sich zwischen den Ringkörpern 25 an den Rohrabschnitten R1, R2 erstrecken und auch die Ringe 24' miteinander verbinden. Die Ringkörper 25 könnten auch entfallen, falls die Stege 26 direkt mit den Rohrabschnitten R1, R2 verbunden werden.

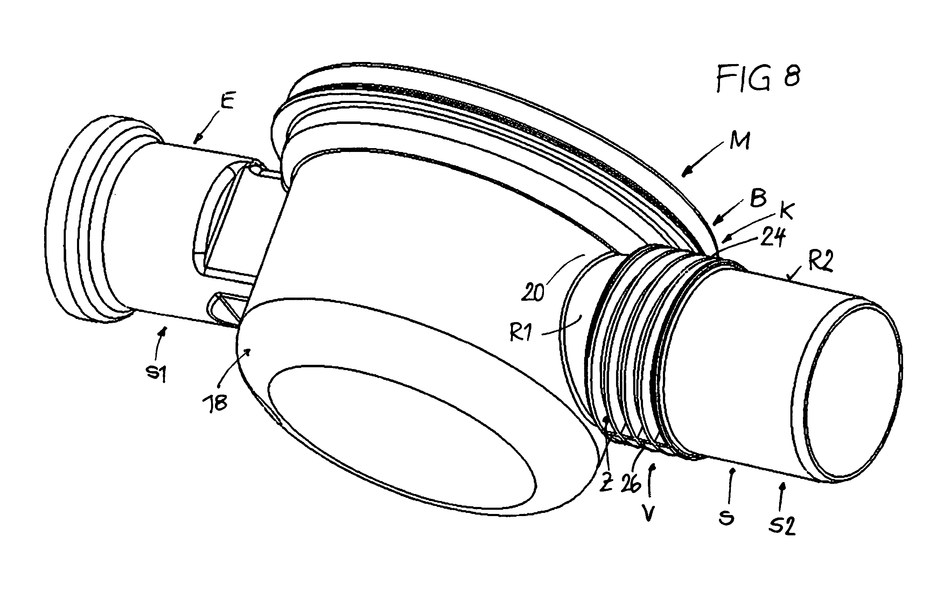

Der in Fig. 8 gezeigte Abwasser- oder Schachtbauteil M ist ein für die Abwassertechnik verwendbarer, sogenannter Ablauf B, an dessen Behälter 18, hier nur in der Behälterumfangswand 20, ein Zulauf S1 und ein Ablauf S2 angeformt sind. Der Ablauf S2 ist als Verbundrohrstück S ähnlich der Ausführungsform in Fig. 6 ausgebildet und in die Behälterwand 20 eingeformt. Dies bedeutet, dass der ganze Ablauf B in einer Spritzgussform hergestellt wird und dabei auch das den Ablauf S2 bildende Verbund-Rohrstück S.

Das Verbundrohrstück S besteht aus den Rohrabschnitten R1, R2, dem flexiblen Rohrzwischenstück Z, der offenen Stützstruktur K (einzelne Ringe oder eine Spirale mit Spiralwindungen 24) und der Biegesperre V in Form des durchgehenden Stegs 26.

Da das Verbundrohrstück in Fig. 8 den Ablauf S2 bildet, und der Ablauf ein bestimmtes Gefälle nach unten haben muss, ist in der Einbaulage des Behälters 18 (mit der oberen Öffnung nach oben) die Biegesperre V unten positioniert, so dass der Rohrabschnitt R2 nicht aus Versehen relativ zum Rohrabschnitt R1 unzulässig weit nach oben geknickt werden kann, wodurch das Ablaufgefälle gefährdet wäre. Die offene Struktur K ist mit dem Rohrzwischenstück Z stoffschlüssig verbunden, zweckmäßigerweise dadurch, dass beim Spritzgießen zunächst der Rohrabschnitte R1, R2 und der offenen Stützstruktur K mit der Biegesperre V in einem unmittelbar folgenden zweiten Schritt das Rohrzwischenstück Z gespritzt wird und sich mit der offene Stützstruktur haftend verbindet.

In einer nicht gezeigten Ausführungsform könnte die offene Stützstruktur zumindest teilweise oder zur Gänze in das Rohrzwischenstück eingebettet sein.

Da entweder über die Spiralwindungen 24 und/oder den Steg 26 und/oder die Zwischenstege 26' eine durchgehende Strömungsverbindung im Formhohlraum existiert, kann zum Formen der Rohrabschnitte R1, R2 und der offenen Stützstruktur K mit der Biegesperre V eine einzige gemeinsame Angussstelle in der Spritzgussform verwendet werden.

## Patentansprüche

1. Abwasser- oder Schachtbauteil (M), insbesondere Abwasser-Ablaufbehälter oder Schacht- oder Schachtwandelement, mit einem Kunststoff-Behälterkörper (18), der mindestens ein an einer Behälterwand (20, 19) angeformtes Zulauf- und/oder Ablauf-Rohrstück (S1, S2) aus Kunststoff aufweist, **dadurch gekennzeichnet, dass** das Zulauf-und/oder Ablauf-Rohrstück (S1, S2) ein einstückiges Verbund-Rohrstück (S) mit mindestens zwei starren beabstandeten Rohrabschnitten (R1, R2) und einem aus flexiblem Material bestehenden Rohrzwischenstück (Z) ist, das dicht mit den Enden (2, 5) der Rohrabschnitte verbunden ist, dass die Rohrabschnitte (R1, R2) Spritzgussteile aus Kunststoff sind und das Rohrzwischenstück (Z) ein Spritzgussteil aus thermoplastischem Elastomer mit Shore-Härten zwischen 30 und 70 ist, und dass entweder benachbart zur äußeren Oberfläche des Rohrzwischenstücks (Z) eine offene Stützstruktur (K) mit annähernd ringförmiger Gestalt vorgesehen und mit wenigstens einem Rohrabschnitt (R1, R2) einstückig verbunden oder das Rohrzwischenstück (Z) mit einer weitgehend glatten Innenwand (10) und außenseitig mit einer integrierten Stützstruktur (11) aus Umfangsrippen (12) und dazwischenliegenden Umfangsnuten (13) aus dem thermoplastischen Elastomer geformt ist.

2. Abwasser- oder Schachtbauteil nach Anspruch 1, **dadurch gekennzeichnet, dass** das Rohrzwischenstück (Z) in Zweikomponententechnik mit den Rohrabschnitten (R1, R2) gespritzt ist.

3. Abwasser- oder Schachtbauteil nach Anspruch 1, **dadurch gekennzeichnet, dass** die offene Stützstruktur (K) auch mit der Oberfläche des Rohrzwischenstücks (Z) stoffschlüssig verbunden ist.

4. Abwasser- oder Schachtbauteil nach Anspruch 1, **dadurch gekennzeichnet, dass** die Stützstruktur (K) wenigstens eine im Wesentlichen zur Rohrstückachse koaxiale, gewindeartige Spirale mit Zwischenabständen zwischen den Spiralwindungen (24) ist oder einzelne, im Wesentlichen zur Rohrstückachse koaxiale, voneinander beabstandete Ringe (24') aufweist, und dass benachbarte Spiralwindungen (24) bzw. Ringe (24') der Stützstruktur (K) über wenigstens einen annähernd zur Rohrstückachse weitgehend parallelen Zwischensteg (26, 26') verbunden sind.

5. Abwasser- oder Schachtbauteil nach Anspruch 1, **dadurch gekennzeichnet, dass** in zumindest einem Umfangsbereich des Verbund-Rohrstücks (S) zwischen den Rohrabschnitten (R1, R2) ein durchgehender Steg (26) vorgesehen ist, der eine Biegesperre für eine bestimmte Knickrichtung zwischen den Rohrabschnitten (R1, R2) bildet, und dass der Steg (26) außerhalb der Stützstruktur (K) und von dieser getrennt verläuft.

6. Abwasser- oder Schachtbauteil nach Anspruch 4 oder 5, **dadurch gekennzeichnet, dass** die Spiralwindungen (24) bzw. die Ringe (24'), und, vorzugsweise, die Zwischenstege (26') bzw. der Steg (26) einen annähernd dreieckigen oder Hochkant-Rechteck-Querschnitt aufweist.

7. Abwasser- oder Schachtbauteil nach Anspruch 1, **dadurch gekennzeichnet, dass** die Stützstruktur (K) ein mit den Rohrabschnitten (R1, R2) einstückiger Spritzgussformteil ist.

8. Abwasser- oder Schachtbauteil nach Anspruch 1, **dadurch gekennzeichnet, dass** als lokale Biegesperre (V) an den Rohrabschnitten (R1, R2) angebrachte, aufeinander ausgerichtete, aneinander abstützbare Sperrnasen (16, 17) vorgesehen sind.

9. Verfahren zum Herstellen des Abwasser- oder Schachtbauteils (M) gemäß wenigstens einem der Ansprüche 1 bis 8, aus Kunststoff in einer Spritzgussform, **dadurch gekennzeichnet, dass** nach dem Spritzgießen der in Achsrichtung beabstandeten Rohrabschnitte (R1, R2) in noch heißem Zustand das Rohrzwischenstück (Z) durch Spritzgießen aus dem thermoplastischen Elastomer innerhalb des Abstands in situ geformt und zweikomponententechnisch mit den Innenseiten der Enden (2, 5) der beiden Rohrabschnitte (R1, R2) verbunden wird.

## Claims

1. Drain or manhole segment (M), particularly a drain outflow container or element of a manhole or manhole wall, having a plastics container body (18) which comprises at least one inflow and/or outflow pipe section (S1, S2) made of plastics, formed on a container wall (20, 19), **characterised in that** the inflow and/or outflow pipe section (S1, S2) is a one-piece composite pipe section (S) having at least two rigid, spaced pipe segments (R1, R2) and an intermediate pipe segment (Z) consisting of flexible material, which is tightly connected to the ends (2, 5) of the pipe segments, **in that** the pipe segments (R1, R2) are injection-moulded plastics components and the intermediate pipe section (Z) is an injection moulded part made of thermoplastic elastomer with a Shore hardness of between 30 and 70, and **in that** either adjacent to the outer surface of the intermediate pipe section (Z) is provided an open support structure (K) of approximately annular configuration, connected in one piece with at least one pipe segment (R1, R2), or the intermediate pipe section (Z) is formed from the thermoplastic elastomer with a substantially smooth inner wall (10) with, on the outside, an integrated support structure (11) of circumferential ribs (12) and, between them, circumferential grooves (13).

2. Drain or manhole segment according to claim 1, **characterised in that** the intermediate pipe section (Z) is injection-moulded by the two-component method with the pipe segments (R1, R2).

3. Drain or manhole segment according to claim 1, **characterised in that** the open support structure (K) is also materially connected to the surface of the intermediate pipe section (Z).

4. Drain or manhole segment according to claim 1, **characterised in that** the support structure (K) is at least one spiral in the shape of a thread, substantially coaxial with the axis of the pipe section with intermediate spacings between the coils (24) of the spiral, or comprises individual spaced-apart rings (24') that are substantially coaxial with the axis of the pipe section, and **in that** adjacent coils (24) or rings (24') of the support structure (K) are joined together via at least one intermediate crosspiece (26, 26') which is substantially parallel to the axis of the pipe section.

5. Drain or manhole segment according to claim 1, **characterised in that** in at least one circumferential region of the composite pipe section (S) between the pipe segments (R1, R2) is provided a continuous crosspiece (26) which forms a bend preventer for a specific direction of bending between the pipe segments (R1, R2), and **in that** the crosspiece (26) extends outside the support structure (K) or extends separately from the latter.

6. Drain or manhole segment according to claim 4 or 5, **characterised in that** the spiral coils (24) or the rings (24') and, preferably, the intermediate crosspieces (26') or the crosspiece (26) has a substantially triangular or endwise rectangular cross-section.

7. Drain or manhole segment according to claim 4 or 5, **characterised in that** the support structure (K) is an injection-moulded component which is formed in one piece with the pipe segments (R1, R2).

8. Drain or manhole segment according to claim 1, **characterised in that** locking noses (16, 17) mounted on the pipe segments (R1, R2), adapted to be supported on one another and aligned with one another, are provided as the local bend preventer (V).

9. Method of producing the drain or manhole segment (M) according to at least one of claims 1 to 8 from plastics in an injection moulding mould, **characterised in that** after the injection moulding of the axially spaced pipe segments (R1, R2), while they are still hot, the intermediate pipe section (Z) is formed *in situ* by injection moulding from the thermoplastic elastomer within the spacing and is joined to the insides of the ends (2, 5) of the two pipe segments (R1, R2) by the two-component method.

## Revendications

1. Elément d'égout ou de regard (M), en particulier contenant d'évacuation des eaux usées ou élément d'égout ou de regard, doté d'un corps de contenant en matière plastique (18), qui comprend au moins un segment de tuyau d'admission et/ou d'évacuation (S1, S2) en matière plastique intégré sur une paroi du contenant (20, 19), **caractérisé en ce que** le segment de tuyau d'admission et/ou d'évacuation (S1, S2) est un segment de tuyau composite monobloc (S) doté d'au moins deux sections de tuyau (R1, R2) rigides et espacées et d'une pièce intermédiaire de tuyau (Z) constituée d'une matière flexible, laquelle pièce est reliée de manière étanche aux extrémités (2, 5) des sections de tuyau, **en ce que** les sections de tuyau (R1, R2) sont des pièces moulées par injection en matière plastique et la pièce intermédiaire de tuyau (Z) est une pièce moulée par injection en élastomère thermoplastique présentant des duretés Shore comprises entre 30 et 70, et **en ce que** soit une structure d'appui ouverte (K) dotée d'une forme à peu près annulaire est prévue au voisinage de la surface extérieure de la pièce intermédiaire de tuyau (Z) et reliée de manière solidaire à au moins une section de tuyau (R1, R2) soit la pièce intermédiaire de tuyau (Z) est moulée à partir de l'élastomère thermoplastique avec une paroi intérieure (10) majoritairement lisse et côté extérieur avec une structure d'appui intégrée (11) constituée de nervures périphériques (12) et de rainures périphériques (13) situées entre celles-ci.

2. Elément d'égout ou de regard selon la revendication 1, **caractérisé en ce que** la pièce intermédiaire de tuyau (Z) est injectée avec les sections de tuyau (R1, R2) au cours d'une technique de moulage par injection à deux composants.

3. Elément d'égout ou de regard selon la revendication 1, **caractérisé en ce que** la structure d'appui ouverte (K) est également reliée par coopération de matières à la surface de la pièce intermédiaire de tuyau (Z).

4. Elément d'égout ou de regard selon la revendication 1, **caractérisé en ce que** la structure d'appui (K) est au moins une spirale de type enroulement, sensiblement coaxiale à l'axe de segment de tuyau, dotée d'intervalles entre les enroulements en spirale (24) ou comprend des anneaux (24') individuels, sensiblement coaxiaux à l'axe de segment de tuyau, espacés les uns des autres, et **en ce que** les enroulements en spirale (24) et/ou anneaux (24') voisins de la structure d'appui (K) sont reliés par au moins une entretoise intermédiaire (26, 26') à peu près majoritairement parallèle à l'axe de segment de tuyau.

5. Elément d'égout ou de regard selon la revendication 1, **caractérisé en ce qu'**une entretoise continue (26) est prévue dans au moins une zone périphérique du segment de tuyau composite (S) entre les sections de tuyau (R1, R2), laquelle entretoise forme un dispositif de verrouillage fléchi pour une direction de courbure définie entre les sections de tuyau (R1, R2), et **en ce que** l'entretoise (26) s'étend à l'extérieur de la structure d'appui (K) et séparément de celle-ci.

6. Elément d'égout ou de regard selon la revendication 4 ou 5, **caractérisé en ce que** les enroulements en spirale (24) et/ou les anneaux (24'), et, de préférence, les entretoises intermédiaires (26') et/ou l'entretoise (26) comprennent une section transversale à peu près triangulaire ou rectangulaire de chant.

7. Elément d'égout ou de regard selon la revendication 1, **caractérisé en ce que** la structure d'appui (K) est une pièce moulée par injection solidaire des sections de tuyau (R1, R2).

8. Elément d'égout ou de regard selon la revendication 1, **caractérisé en ce que** des taquets de verrouillage (16, 17) aménagés en tant que dispositif de verrouillage local (V) sur les sections de tuyau (R1, R2), orientés les uns vers les autres et pouvant s'appuyer les uns sur les autres sont prévus.

9. Procédé de fabrication de l'élément d'égout ou de regard (M) selon au moins l'une quelconque des revendications 1 à 8, constitué d'une matière plastique moulée par injection, **caractérisé en ce qu'**après le moulage par injection des sections de tuyau (R1, R2) espacées dans la direction axiale, la pièce intermédiaire de tuyau (Z) est formée in situ, alors que les sections sont encore chaudes, par moulage par injection de l'élastomère thermoplastique à l'intérieur de l'espacement, et reliée par une technique de moulage à deux composants aux faces intérieures des extrémités (2, 5) des deux sections de tuyau (R1, R2).
